# EUROPÄISCHE PATENTSCHRIFT

(11) **EP 3 449 152 B1**
(45) Veröffentlichungstag und Bekanntmachung des Hinweises auf die Patenterteilung: **30.10.2019**
(21) Anmeldenummer: 16720091.4
(22) Anmeldetag: 26.04.2016
(51) Int. Cl.: F16G 3/08, F16G 3/16

(54) **ANTRIEBSBAND-VERBINDUNGSEINRICHTUNG, EINGERICHTET ZUR ZUGFESTEN VERBINDUNG VON FLACHEN ANTRIEBSBAND-ENDABSCHNITTEN, ANTRIEBSBAND UND DAMIT AUSGESTATTETE FÖRDEREINRICHTUNG**
DRIVE-BELT CONNECTING DEVICE DESIGNED FOR THE TENSION-RESISTANT CONNECTION OF FLAT DRIVE-BELT END SECTIONS, DRIVE BELT, AND CONVEYING DEVICE EQUIPPED THEREWITH
DISPOSITIF DE LIAISON DE COURROIE D'ENTRAÎNEMENT, CONÇU POUR RELIER DE MANIÈRE RÉSISTANTE À LA TRACTION DES PARTIES D'EXTRÉMITÉ PLATES DE COURROIE D'ENTRAÎNEMENT, COURROIE D'ENTRAÎNEMENT ET DISPOSITIF DE TRANSPORT ÉQUIPÉ DE CELLE-CI

(43) Veröffentlichungstag der Anmeldung: 06.03.2019
(73) Patentinhaber: Nordischer Maschinenbau Rud. Baader GmbH + Co. KG, 23560 Lübeck (DE)
(72) Erfinder: DALGAARD-NIELSEN, Ib Verner, 8362 Hoerning (DK)
(74) Vertreter: Stork Bamberger Patentanwälte PartmbB
(86) Internationale Anmeldenummer: PCT/EP2016/059314
(87) Internationale Veröffentlichungsnummer: WO 2017/186276

(56) Entgegenhaltungen:
- EP-A2- 0 543 523
- EP-A2- 2 600 033
- DE-C- 24 160
- US-A1- 2008 060 171

## Beschreibung

Die Erfindung betrifft eine Antriebsband-Verbindungseinrichtung, eingerichtet zur zugfesten Verbindung von flachen Antriebsband-Endabschnitten, die jeweils zwei Bandflachseiten aufweisen, von denen wenigstens eine erste Bandflachseite ein Band-Oberflächenprofil aufweist, umfassend einen mit Verbindungsteilen in Überlappungsanordnung mehrteiligen, in Bandzugrichtung eine Längsdimension aufweisenden Verbindungskörper, der einen die flachen Antriebsband-Endabschnitte zum Verbinden aufnehmenden Verbindungsraum aufweist, wobei die Verbindungsteile zur zugfesten Verbindung der Antriebsband-Endabschnitte aneinander festsetzbar sind und für Verbindungsanlagen mit profilierten Verbindungsflächen zum formschlüssigen Eingriff in die Band-Oberflächenprofile eingerichtet sind. Die Erfindung bezieht sich auch auf ein flaches Antriebsband, das mittels wenigstens einer Antriebsband-Verbindungseinrichtung zu einem in einem Umlauf endlos führbaren Band verbunden ist. Weiterhin erfasst die Erfindung eine Fördereinrichtung, umfassend zwei jeweils mit wenigstens einer genannten Antriebsband-Verbindungseinrichtung endlos verbundene und im Umlauf führbare flache Antriebsbänder.

Verbindungseinrichtungen zum Verbinden von Bandelementen, insbesondere von Zahnriemenelementen, sind in einer Vielzahl von Gestaltungen bekannt. Die Verbindungseinrichtungen sind eingerichtet, um einseitig eine Zahnstruktur aufweisende Bandenden ein und desselben Bandes zu einem umlaufenden Band oder Bandenden von zwei aneinander anzuschließenden Bändern miteinander zu verbinden. Insbesondere dann, wenn die verbundenen Bänder in Fördereinrichtungen oder dergleichen als Antriebsbänder, nämlich insbesondere als getriebene Bänder zum Transport von Objekte fördernden Transportelementen verwendet werden, kommt es insbesondere auf hohe Zugfestigkeit und Dauerhaftigkeit der Verbindung an. In Fällen, in denen ein flaches Antriebsband mittels einer Verbindungseinrichtung zu einem endlos umlaufenden oder geführten Umlaufband verbunden ist, weisen die Bänder zur Umlenkung eine erforderliche Krümmung oder Biegung zulassende Flexibilität auf. Antriebs- oder Zahnriemenbänder werden üblicherweise an einer mit einer Zahnung profilierten Flachseite konkav zur Umlenkung gebogen. Dabei kommt es auch darauf an, dass ein umlaufend geführtes Antriebsband ohne Beeinträchtigung durch eine Antriebsband-Verbindungseinrichtung betrieben werden kann.

Antriebsbänder wie Zahnriemenbänder, die insbesondere in Maschinen und Fördereinrichtungen der Nahrungsmittel verarbeitenden Industrie eingesetzt werden, unterliegen besonderen Hygiene-Anforderungen. Die verbundenen Antriebsbänder müssen insbesondere auch an der Bandverbindungseinrichtung geschützt und zum Beseitigen von Resten, Ablagerung, Betriebsmitteln oder dergleichen ausreichend zu reinigen sein.

Üblicherweise sind bekannte Bandverbindungseinrichtungen derart eingerichtet, dass sie zu verbindende Bandenden zwischen Klemmstücken und/oder Klemmplatten aufnehmen. Zum Herstellen einer Klemm- oder Formschlussverbindung der Bandendabschnitte sind Befestigungsmittel mit Befestigungselementen vorgesehen, die senkrecht zu Bandflachseiten verbundener Bandendabschnitte gerichtet sind und in Flachseiten äußerer Klemmplatten eingebrachte Ausnehmungen oder Bohrungen aufweisen. Dies schränkt Gestaltungsmöglichkeiten der Klemmplatten, zum Beispiel zum Anbringen von Führungs- oder Lagerelementen ein. Insbesondere im Fall von Schnappverbindungen (zum Beispiel EP 0 628 141 B1) entstehen Vorsprünge oder Hinterschneidungen. Befestigungsmittel bekannter Bandverbindungseinrichtungen bewirken zusätzlich zu einem Formschluss durch Klemmung eine Presskraft, die Bandoberflächenprofile durch Quetschung beansprucht oder gar deformiert.

Einerseits gibt es Bandverbindungseinrichtungen, die zu verbindende Bandendabschnitte überlappungsfrei in einer Ebene aufnehmen (z. B. EP 0 543 523; EP 0 628 141 B1; US 7 810 219 B2). Andererseits sind Bandverbindungseinrichtungen bekannt, in denen verbundene Bandendabschnitte überlappen (z. B. EP 2 600 033).

Der Erfindung liegen die Ziele zugrunde, eine kompakte Antriebsband-Verbindungseinrichtung zu schaffen, die eine schonende, von Klemmkräften entlastete, lange Standzeit gewährleistende Verbindung der Antriebsband-Endabschnitte herstellt. Die Antriebsband-Verbindungseinrichtung soll besonderen hygienischen, Verschmutzung vermeidenden Erfordernissen genügen. Der Verbindungskörper der Antriebsband-Verbindungseinrichtung soll insbesondere derart kompakt mit einfach zu gestaltender Oberfläche bauen, dass er einen Funktionskörper zur Körperführung sowie auch zur Lagerung von Elementen bildet.

Die Ziele werden in Verbindung mit den Merkmalen der eingangs genannten Bandverbindungseinrichtung, die der Gattung nach aus EP 0 543 523 bekannt ist, dadurch gelöst, dass der Verbindungsraum zur Aufnahme der Antriebsband-Endabschnitte in Überlappungsanordnung längs einer Verbindungslinie eingerichtet ist, die sich in der Längsdimension des Verbindungskörpers erstreckt, wobei ein erstes äußeres Verbindungsteil und ein zweites äußeres Verbindungsteil den Verbindungsraum begrenzen und zugehörig eine erste äußere Verbindungsfläche und eine zweite äußere Verbindungsfläche aufweisen, die zur Verbindungsanlage einerseits an den einen Antriebsband-Endabschnitt und andererseits an den anderen Antriebsband-Endabschnitt setzbar sind, und wobei innerhalb des Verbindungsraums ein inneres Verbindungsteil mit einer ersten inneren Verbindungsfläche und einer dieser gegenüberliegenden zweiten inneren Verbindungsfläche angeordnet ist, die zur Verbindungsanlage einerseits an den einen Antriebsband-Endabschnitt und andererseits an den anderen Antriebsband-Endabschnitt setzbar sind, wobei einerseits die erste äußere Verbindungsfläche und die erste innere Verbindungsfläche und andererseits die zweite äußere Verbindungsfläche und die zweite innere Verbindungsfläche einander gegenüberliegen, dass weiterhin ein Befestigungsmittel eingerichtet ist, das das erste äußere Verbindungsteil und das zweite äußere Verbindungsteil mit begrenzter festen Distanz zwischen der ersten äußeren Verbindungsfläche und der zweiten äußeren Verbindungsfläche aneinander festsetzt, und dass ein Verbindungsmittel eingerichtet ist, das das innere Verbindungsteil zur in Bandzugrichtung festen Verbindung mit wenigstens einem der beiden äußeren Verbindungsteile verbindet.

Erfindungsgemäß erreicht man eine Reihe von Vorteilen. Das innere Verbindungsteil kommt eingebettet zwischen den zu verbindenden Antriebsband-Endabschnitten zu liegen. Der Verbindungsraum ist so ausgebildet, angeordnet und bemessen, dass die Antriebsband-Endabschnitte formschlüssig einerseits an einen der äußeren Verbindungsteile und andererseits an dem inneren Verbindungsteil zur Anlage gelangen. Die Anordnung ist durch eine feste, begrenzte Distanz zwischen der ersten äußeren Verbindungsfläche und der zweiten äußeren Verbindungsfläche bestimmt. Mittels des Befestigungsmittels ist die Distanz so einstellbar oder einzurichten, dass die zugfeste Verbindung im Wesentlichen durch die Formschlussverbindungen bewirkt wird. Die Verbindungsteile üben keine oder nur eine definiert begrenzte Klemmkraft auf die Antriebsband-Endabschnitte aus. Das innere Verbindungsteil befindet sich durch das Verbindungsmittel mit wenigstens einem äußeren Verbindungsteil vorzugsweise unmittelbar im Eingriff, derart, dass es in Bandzugrichtung bzw. in der Längsdimension der Antriebsband-Verbindungseinrichtung, also in Richtung der Verbindungslinie unverschiebbar gehalten ist.

Die von der Erfindung betroffenen Antriebsbänder wie Zahnriemen oder dergleichen sind im Betrieb besonderer Belastung zum Beispiel durch Lastwechsel oder allgemein durch Lastzustände zwischen Stillstand und höchster Geschwindigkeit, mit der ein Antriebsband bewegt wird, ausgesetzt. Trotz einer derartigen Beanspruchung lässt sich das Befestigungsmittel der erfindungsgemäßen Antriebsand-Verbindungseinrichtung einfach, insbesondere als einfache Schraubverbindung einrichten, die davon befreit ist, zum Verbinden der flachen Antriebsband-Endabschnitte eine die Zugfestigkeit erhöhende Klemmkraft zu erzeugen. Es lassen sich auch die äußeren Verbindungsteile derart ausbilden und anordnen, dass sie von dem Befestigungsmittel weitgehend freibleiben, nämlich insbesondere vorteilhaft an Außenseiten, die sich parallel zu den äußeren Verbindungsflächen erstrecken. Es resultiert, dass Kontur und Form der Antriebsband-Verbindungseinrichtung weitgehend unabhängig von Anordnung und Funktion des Befestigungsmittels gestaltet werden können. Dies ist hinsichtlich Formgestaltung und Anbringung von Anschlusselementen wie Lagerelementen von bzw. an Seiten oder Wänden der Antriebsband-Verbindungseinrichtung von besonderem Vorteil. An einem Körperbereich kann zum Beispiel ein Formteil zum Zusammenwirken mit wenigstens einer Führungseinrichtung eingerichtet werden. Die erfindungsgemäße Antriebsband-Verbindungseinrichtung erlaubt es auch, besondere Anschluss- oder Lagerelemente zum Lagern von Transportelementen anzubringen.

Ein besonderer Vorteil der erfindungsgemäßen Antriebsband-Verbindungseinrichtung besteht darin, dass ein besonders belastbares flaches Antriebsband eingerichtet werden kann, das mittels wenigstens einer Antriebsband-Verbindungseinrichtung zu einem im Umlauf endlos führbaren flachen Antriebsband verbunden ist. Mit zwei derartig verbundenen, endlosen Antriebsbändern lässt sich eine besondere Fördereinrichtung gestalten, umfassend zwei flache Antriebsbänder, die in Parallelanordnung mit Parallelabstand angeordnet und längs einer Förderstrecke und einer Rückführstrecke gemeinsam umlaufend geführt und antreibbar sind, und umfassend wenigstens zwei der Antriebsband-Verbindungseinrichtungen, von denen die eine das eine flache Antriebsband und die andere das andere flache Antriebsband endlos verbindet, wobei ein Förderband durch eine Reihe von parallelen Transportelementen und Transportblöcken gebildet ist, die an den flachen Transportbändern zur Mitnahme befestigt sind und jeweils im Paar ein Transportlager bilden, das zwischen den beiden flachen Antriebsbändern ein Transportelement zur Förderung eines Objekts lagert, und wobei die Verbindungskörper der Antriebsband-Verbindungseinrichtungen als genannte Transportblöcke eingerichtet sind.

Hinsichtlich der Ausbildung des Befestigungsmittels besteht eine vorteilhafte Gestaltung der Antriebsband-Verbindungseinrichtung darin, dass das Befestigungsmittel mit Befestigungselementen eingerichtet ist, die außerhalb des Verbindungsraums quer zur Richtung der Verbindungslinie sowie quer zu einer Schichtungsrichtung der Verbindungsteile angeordnet sind, die durch die Überlappungsanordnung der Verbindungsteile bestimmt ist. Funktionsseiten bzw. Oberflächen, die sich, den äußeren Verbindungsflächen gegenüberliegend, außen an der Antriebsband-Verbindungseinrichtung erstrecken bleiben vollständig frei von Befestigungselementen.

Zweckmäßig wird das Verbindungsmittel, das das innere Verbindungsteil mit wenigstens einem der beiden äußeren Verbindungsteile verbindet, als Formschlussverbindung eingerichtet, die das innere Verbindungsteil in der Antriebsband-Verbindungseinrichtung, gegen Verschiebung oder Verlagerung in Bandzugrichtung, festsetzt. Als Formschlussverbindung eignet sich besonders eine Nut/Feder-Verbindung. Zum Beispiel wird an wenigstens einem durch die Längsdimension der Antriebsband-Verbindungseinrichtung bestimmten Längsende des inneren Verbindungsteils ein insbesondere zu den inneren Verbindungsflächen quer gerichteter Vorsprung, der ein Federelement bildet, ausgebildet, der in eine korrespondierende Ausnehmung in wenigstens einem der äußeren Verbindungsteile formschlüssig einfasst. In einer Gestaltung, in der sämtliche Verbindungsflächen und die Antriebsband-Endabschnitte an ihren beiden Bandflachseiten profiliert sind, kann eine solche Verbindung auch selbstständig das Verbindungsmittel zum Festsetzen des inneren Verbindungsteils innerhalb des Verbindungskörpers bilden.

Mit der erfindungsgemäßen Antriebsband-Verbindungseinrichtung lassen sich Antriebsband-Endabschnitte verbinden, die jeweils wenigstens einseitig vorzugsweise mit einer Zahnung profiliert sind. An den äußeren Verbindungsteilen und dem inneren Verbindungsteil werden Profile ausgebildet, die mit den Bandprofilen komplementär sind bzw. mit diesen korrespondieren.

Zum Beispiel wird die erste innere Verbindungsfläche zum formschlüssigen Eingriff in ein Band-Oberflächenprofil der Bandflachseite eines zugordneten flachen Antriebsband-Endabschnitts profiliert ausgebildet. Die zweite äußere Verbindungsfläche kann stattdessen oder zusätzlich zum formschlüssigen Eingriff in ein Band-Oberflächenprofil der Bandflachseite eines zugordneten flachen Antriebsband-Endabschnitts profiliert ausgebildet sein.

Insbesondere in einer Gestaltung mit profilierter erster innerer Verbindungsfläche des inneren Verbindungsteils wird dessen zweite innere Verbindungfläche zur planen Verbindungsanlage an eine entsprechend plane Bandflachseite eines zugeordneten flachen Antriebsband-Endabschnitts ausgebildet. In einer Gestaltung mit der profilierten ersten inneren Verbindungsfläche und der planen zweiten inneren Verbindungsfläche wird zweckmäßig auch die erste äußere Verbindungsfläche zur planen Verbindungsanlage an eine entsprechend plane Bandflachseite eines zugeordneten flachen Antriebsband-Endabschnitts ausgebildet. Es resultiert, dass die zweite äußere Verbindungsfläche profiliert ausgebildet ist.

Um zum Beispiel die Antriebsband-Endabschnitte ein und desselben Antriebsbandes, das einseitig eine Zahnung aufweist, zu einem umlaufenden Antriebsband zu verbinden, werden einerseits die erste äußere Verbindungsfläche und die zweite innere Verbindungsfläche und andererseits die erste innere Verbindungsfläche und die zweite äußere Verbindungsfläche gleich ausgebildet.

Trotz der Überlappung der Antriebsband-Endabschnitte innerhalb der erfindungsgemäßen Antriebsband-Verbindungseinrichtung lässt sich bei Bedarf ein durch die Überlappung an sich resultierender Versatz reduzieren oder ausgleichen. Zu diesem Zweck wird das innere Verbindungsteil innerhalb des Verbindungsraums zum Herstellen einer in erforderlichem Maß schräg ausgerichteten Überlappung der zu verbindenden Antriebsband-Endabschnitte längs der Verbindungslinie schräg angeordnet.

Eine bevorzugte Gestaltung besteht darin, dass das erste äußere Verbindungsteil durch ein Verbindungsgehäuse mit einem Gehäuse-Innenraum gebildet ist, in den das innere Verbindungsteil und das zweite äußere Verbindungsteil im Passsitz einfügbar sind. Das äußere Verbindungsteil bildet ein im Stirnquerschnitt U-förmiges, kappenartiges Teil mit einer Stegwand und Schenkelwänden, die das innere Verbindungsteil an drei Seiten einkapseln. Durch die Einkapselung erzielt man eine Antriebsband-Verbindungseinrichtung, nämlich einen Verbindungskörper, der an seinem Längsumfang in besonderem Maß geschlossen ist und auch an seinen Stirnseiten, in die die Antriebsband-Endabschnitte eintreten, mittels der Passung weitgehend gegen Staub und Flüssigkeit, besonderen hygienischen Anforderungen gerecht werdend, gerichtet ist.

Eine Ausgestaltung besteht darin, dass an der Antriebsband-Verbindungseinrichtung wenigstens ein Führungselement zur Längsführung der Antriebsband-Verbindungseinrichtung entlang einer Führungslinie eingerichtet ist. Vorteilhaft ist an wenigstens einem der äußeren Verbindungsteile eine das Führungselement bildende, sich in der Längsdimension des Verbindungskörpers erstreckende Führungs-Längsnut ausgebildet, die zur Gleitführung auf eine die Führungslinie bestimmende Führungsschiene aufsetzbar ist. Gemäß einer weiteren Gestaltung weist der Verbindungskörper wenigstens ein Kulissenteil auf, das zum formschlüssigen Eingriff in eine Kulissenausnehmung einer Umlenkeinrichtung geformt ist.

Zweckmäßig sind die Transportelemente entlang der gesamten Umlaufstrecke der beiden Antriebsbänder, insbesondere abstandlos oder so dicht wie möglich, angeordnet. In abstandsloser Anordnung der Transportelemente erhält man eine quasi geschlossene, umlaufend führbare Förderfläche, die in dieser Form ein Transportmittel, nämlich ein Förderband bildet.

Eine besondere Gestaltung der erfindungsgemäßen Fördereinrichtung besteht darin, dass die Transportlager als Schwenklagerstellen eingerichtet sind, die jeweils das Transportelement um eine Transportelement-Schwenkachse hin und her schwenkbar anlenken, wobei an den Transportblöcken jeweils Schwenklagerstellen ausgebildet sind.

Zweckmäßig sind die Transportblöcke, einschließlich der durch die Verbindungskörper der Antriebsand-Verbindungseinrichtung gebildeten Transportblöcke, gleich ausgebildet.

Gemäß einer bevorzugten Gestaltung bilden die Transportblöcke treibbare Bandelemente mit gleichen Formteilen, und die Fördereinrichtung ist mit einem Paar von Umlenkrädern jeder Umlaufführung eingerichtet, wobei die Umlenkräder umfangsseitige Kulissenausnehmungen aufweisen, die die gleichen Formteile der treibbaren Bandelemente zur Bandumlenkung und, an wenigstens einem ein Bandantriebsmittel bildenden Umlenkrad des Paares der Umlenkräder, zum Antrieb der flachen Antriebsbänder mitnehmen.

Eine Gestaltung besteht auch darin, dass die Fördereinrichtung mit einer Führungseinrichtung eingerichtet ist, die Führungsschienen aufweist, die an den Förderstrecken und der Rückführstrecke der flachen Antriebsbänder angeordnet sind, und dass an jedem Transportblock wenigstens ein Führungselement eingerichtet ist, das mittels wenigstens einer zugeordneten genannten Führungsschiene geführt ist. Vorteilhaft sind an jedem Transportblock zwei Führungs-Längsnuten, die die Führungselemente bilden, mit von den Bandflachseiten abgewandten Längsöffnungen ausgebildet, wobei die eine Führungs-Längsnut auf einer an der Förderstrecke angeordneten ersten Führungsschiene und die zweite Führungs-Längsnut auf einer an der Rückführstrecke angeordneten zweiten Führungsschiene zur Anlage gelangt.

Ein erfindungsgemäßes Förderband, das mit schwenkbar angelenkten Transportelementen eingerichtet ist, kann mit insbesondere abstandslos eingerichteten Transportelementen ein Muldenband oder dergleichen bilden, in dem zum Beispiel als Objekte zu bearbeitende Fische in besonders dichter Folge quer gefördert werden, um sie einer Bearbeitungsmaschine, zum Beispiel einer Schlachtmaschine, zuzuführen. Die Fördereinrichtung ist dann so eingerichtet, dass die Transportelemente längs einer Förderstrecke in wenigstens einer Transportebene zur Aufnahme und zum Fördern der Produkte ausgebildet sind. Die Einrichtung ist weiter vorteilhaft derart, dass die Transportelemente an einer Abgabestelle am Ende der Förderstrecke umgelenkt und/oder an wenigstens einer Stelle der Förderstrecke abgeschwenkt werden, um das geförderte Objekt aus der Förderstrecke abzuführen.

In der Gestaltung mit schwenkbaren Transportelementen lässt sich deren Schwenkbewegung zum Abkippen eines Produkts und anschließend zum Zurückschwenken in eine Förderposition an einer Stelle oder an mehreren Stellen längs der Förderstrecke steuern. Die Schwenkbewegung kann zum Beispiel durch eine mechanische Kulissensteuerung verwirklicht sein, die das Transportelement zum Abkippen in eine unter einer Förderebene liegende tiefere Ebene und aus dieser wieder in die Förderebene bewegt. Das Abkippen des Transportelements an einer Abgabestelle kann durch eine Steuerung initialisiert werden, zum Beispiel derart, dass an der Abgabestelle ein mit dem abkippbaren Teil des Transportelements zusammenwirkendes Führungselement als steuerbare Weiche zum Steuern der Schwenkbewegung angeordnet wird.

Die Antriebsband-Verbindungseinrichtungen zum Führen und Lagern der Transportelemente sind in Übereinstimmung mit den Transportblöcken ausgebildet und bilden infolgedessen selbst solche Transportblöcke. Die oder mehrere Verbindungsstellen reihen sich funktionsgleich und insbesondere auch formgleich in die Folge der Transportblöcke ein. Die Verbindungskörper wirken wie die anderen Transportblöcke mit den Kulissenausnehmungen zusammen. Um die Transportblöcke besonders zu führen und deren Förderbewegung zu stabilisieren, besteht eine Gestaltung darin, dass die Fördereinrichtung mit einer Führungseinrichtung eingerichtet ist, die wenigstens einer jedem flachen Antriebsband längs dessen Umlauf zugeordnete Führungsschiene aufweist.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbstständiges Detailbeispiel für andere nicht oder nicht vollständig beschriebene unter die Erfindung fallende Ausführungen und Gestaltungen zu verstehen. Insbesondere werden Gestaltungen oder Merkmale, die übergeordnete selbstständige Relevanz haben, mit der Angabe "allgemein" hervorgehoben.

Es zeigen
- Fig. 1: im Längsschnitt I-I der Fig. 2 eine erfindungsgemäße Antriebsband-Verbindungseinrichtung im Zustand einer zugfesten Verbindung von flachen Antriebsband-Endabschnitten,
- Fig. 2: gemäß II-II in Fig. 2 eine Stirnansicht der Antriebsband-Verbindungseinrichtung der Fig. 1,
- Fig. 3: in ungeschnittener Längsansicht die Antriebsband-Verbindungseinrichtung gemäß Fig. 1 und 2,
- Fig. 4: in Längsansicht, mit Ausschnitt im Verbindungsbereich, eine weitere erfindungsgemäße Antriebsband-Verbindungseinrichtung,
- Fig. 5: in Längsansicht eine erfindungsgemäße Fördereinrichtung,
- Fig. 6 und 7: in Draufsicht Abschnitte eines Förderbandes einer Fördereinrichtung wie in Fig. 5.

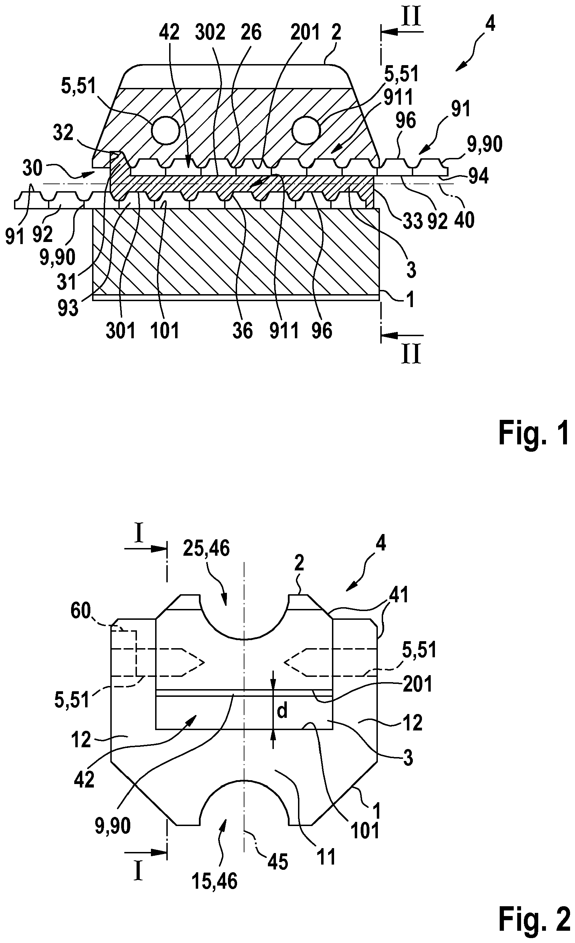

Wie in Fig. 1 bis 3 dargestellt, umfasst eine erfindungsgemäße Antriebsband-Verbindungseinrichtung 4 in Überlappungsanordnung, die längs einer eine Schichtungsrichtung bestimmenden Vertikal-Mittenebene 45 betrachtet wird, ein erstes äußeres Verbindungsteil 1 in Form eines einen Gehäuse-Innenraum bildenden U-förmigen kappenartigen Gehäuses mit Basis- oder Stegteil 11 und zwei Schenkelwänden 12, ein zweites äußeres Verbindungsteil 2 in Form eines zu dem Kappenteil passenden Steckteils sowie ein inneres Verbindungsteil 3 in Form eines plattenförmigen Teils, das in einem Verbindungsraum 42 innerhalb des ersten äußeren Verbindungsteils 1 zwischen diesem und dem zweiten äußeren Verbindungsteil 2 angeordnet ist. Der Verbindungsraum 42 nimmt das innere Verbindungsteil 3 und, im Verbindungszustand, in Überlappungsanordnung längs einer Verbindungslinie 40 zwei Antriebsband-Endabschnitte 93, 94 auf. In Fig. 1 bis 3 ist die Antriebsband-Verbindungseinrichtung 4 im Verbindungszustand, das heißt mit den Antriebsband-Endabschnitten 93, 94 in auf Zug belastbarer Verbindung dargestellt. Die äußeren Verbindungsteile 1, 2 sowie das innere Verbindungsteil 3 bilden zusammen einen Verbindungskörper 41 mit einer Längsdimension, in der sich die Verbindungslinie 40 erstreckt.

Das erste äußere Verbindungsteil 1 und das zweite äußere Verbindungsteil 2 sind mittels eines Befestigungsmittels 5 fest miteinander verbunden. Befestigungselemente 51 sind zum Beispiel Stifte für Stiftverbindungen wie Schraubverbindungen, die die Schenkelwände 12 durchsetzen und in korrespondierende Bohrungen in dem zweiten äußeren Verbindungsteil 2 verankert sind.

Das erste äußere Verbindungsteil 1 weist an der Innenseite des Stegteils 11 eine erste äußere Verbindungsfläche 101 auf, und parallel dazu ist an einer Innenseite des zweiten äußeren Verbindungsteils 2 eine zweite äußere Verbindungsfläche 201 ausgebildet. In dem Befestigungszustand sind das erste äußere Verbindungsteil 1 und das zweite äußere Verbindungsteil 2 mit einer durch die Befestigung begrenzten festen Distanz d zwischen der ersten äußeren Verbindungsfläche 101 und der zweiten äußeren Verbindungsfläche 201 aneinander festgesetzt.

Das innere Verbindungsteil 3 weist eine erste innere Verbindungsfläche 301 sowie eine zweite innere Verbindungsfläche 302 auf. Die innere Verbindungsfläche 301 ist zum Zusammenwirken mit der ersten äußeren Verbindungsfläche 101 und die zweite innere Verbindungsfläche 302 zum Zusammenwirken mit der zweiten äußeren Verbindungsfläche 201 angeordnet. Wesentlich ist allgemein, dass der Verbindungsraum 42 mit der Distanz d, das innere Verbindungsteil 3 und sämtliche Verbindungsflächen derart eingerichtet sind, dass einerseits zwischen der ersten äußeren Verbindungsfläche 101 und der ersten inneren Verbindungsfläche 301 ein Spaltraum zur formschlüssigen Aufnahme des einen Antriebsband-Endabschnitts ausgebildet ist. Andererseits ist zwischen der zweiten äußeren Verbindungsfläche 201 und der zweiten inneren Verbindungsfläche 302 ein Spaltraum ausgebildet, der den anderen Antriebsband-Endabschnitt 94 formschlüssig aufnimmt. Weiterhin ist allgemein wesentlich, dass das innere Verbindungsteil 3 zum Ausbilden der Spalträume im Verbindungszustand der Antriebsband-Verbindungseinrichtung 4 fest, nämlich in Richtung der Verbindungslinie 40 bzw. in der Längsdimension des Verbindungskörpers 41 unverschiebbar in diesen eingefügt ist. In Fig. 1 bis 3 ist als Verbindungsmittel 30 eine Formschlussverbindung in Form einer Nut/Feder-Verbindung ausgebildet. Ein erster Querrand bildet ein Federelement 31, das passgenau in eine korrespondierende Ausnehmung 32, nämlich eine Nut in dem zweiten äußeren Verbindungsteil 2 einfasst.

Das innere Verbindungsteil 3 ist in der Querdimension so bemessen, das es im Passsitz zwischen den Schenkelwänden 12 des ersten äußeren Verbindungsteils 1 sitzt. Eine solche Formschlussverbindung, die ein allgemeines Merkmal der erfindungsgemäßen Antriebsband-Verbindungseinrichtung 4 ist, hat den Vorteil, dass das innere Verbindungsteil 3 einfach ohne zusätzliches Verbindungsmittel in den Verbindungsraum 42 einsetzbar ist.

An seiner anderen Querseite weist das innere Verbindungsteil 3 einen freien Querrand 33 auf, der entsprechend der Distanz d dimensioniert ist, derart, dass der Verbindungsraum dort stirnseitig zusammen mit dem Durchtrittsbereich des eingesetzten Antriebsband-Endabschnitts 94 vollständig geschlossen ist.

Die Antriebsband-Verbindungseinrichtung 4 in Fig. 1 bis 3 ist zum Verbinden von Antriebsband-Endabschnitten 93, 94 von allgemein Antriebsbändern 9 eingerichtet. Die zu verbindenden bzw. verbundenen Antriebsband-Endabschnitte 93, 94 weisen eine erste Bandflachseite 92 auf, die glatt und eben ist, während die zweite Bandflachseite 91 das Zahnprofil 911 einer Zahnung mit zur Banderstreckung quer liegenden Zähnen 96 aufweist. Insbesondere können die verbundenen Antriebsband-Endabschnitte 93, 94 Bestandteile eines durch die Verbindung endlosen flachen Antriebsbandes 90 sein.

Im Ausführungsbeispiel befinden sich die Band-Zahnprofile an den dem zweiten äußeren Verbindungsteil 2 zugewandten zweiten Bandflachseiten 91. Mit dieser Anordnung korrespondiert, dass die erste innere Verbindungsfläche 301 zum formschlüssigen Eingriff in das Band-Oberflächenprofil des einen Antriebsband-Endabschnitts 93 mit einem Zahnprofil 36 entsprechend profiliert ausgebildet ist, wobei zudem die zweiten äußere Verbindungsfläche 201 mit einem Zahnprofil 26 zum formschlüssigen Eingriff in das Band-Oberflächenprofil 911 des anderen Antriebsband-Endabschnitts 34 ausgebildet ist. Im Übrigen ist die erste äußere Verbindungsfläche 101 zur formschlüssigen Anlage an die ebene (profillose) Bandflachseite 92 des Antriebsband-Endabschnitts 93 ausgebildet, und die zweite innere Verbindungsfläche 302 des inneren Verbindungsteils 3 ist glatt und eben zur formschlüssigen Anlage an die ebene (profillose) Bandflachseite 92 des anderen Antriebsband-Endabschnitts 94 ausgebildet.

Die formschlüssige Verbindung der Antriebsband-Endabschnitte 93, 94 zwischen dem inneren Verbindungsteil 3 und jeweils dem äußeren Verbindungsteil 1 bzw. 2 wird durch Einstellung der Distanz d so eingerichtet, dass der Formschluss im Wesentlichen frei von Quetschung, gegebenenfalls aber mit relativ geringer und durch die Distanz d genau begrenzter Klemmung quer zu den Bandflachseiten 91, 92 mittels des Befestigungsmittels 5 eingerichtet ist.

Wie aus Fig. 1 bis 3 ersichtlich, besteht eine besondere zusätzliche Gestaltung darin, dass die Antriebsband-Verbindungseinrichtung 4 bzw. der Verbindungskörper 41 mit sich in der Längsdimension erstreckenden Führungselementen 46 zur Längsführung der Antriebsband-Verbindungseinrichtung 4 entlang einer Führungslinie eingerichtet ist. Im Ausführungsbeispiel sind die Führungselemente 46 durch Führungs-Längsnuten 15, 25 gebildet, die zur Gleitführung auf wenigstens eine die Führungslinie bestimmende Führungsschiene 72 aufsetzbar sind, wie dies nachstehend noch mit einem Beispiel beschrieben wird.

Die Führungslängsnuten 15, 25 werden mittig von der Vertikal-Mittenebene 45 des Verbindungskörpers 41 geschnitten, wobei die Führungslängsnut 15 außen an der Stegwand 11 des ersten äußeren Verbindungsteils 1 ausgebildet ist, während die andere Führungs-Längsnut 25 an der Außenseite des zweiten äußeren Verbindungsteils 2 ausgebildet ist. Die Führungs-Längsnuten 15, 25 weisen zum Beispiel einen halbkreisförmigen Querschnitt auf.

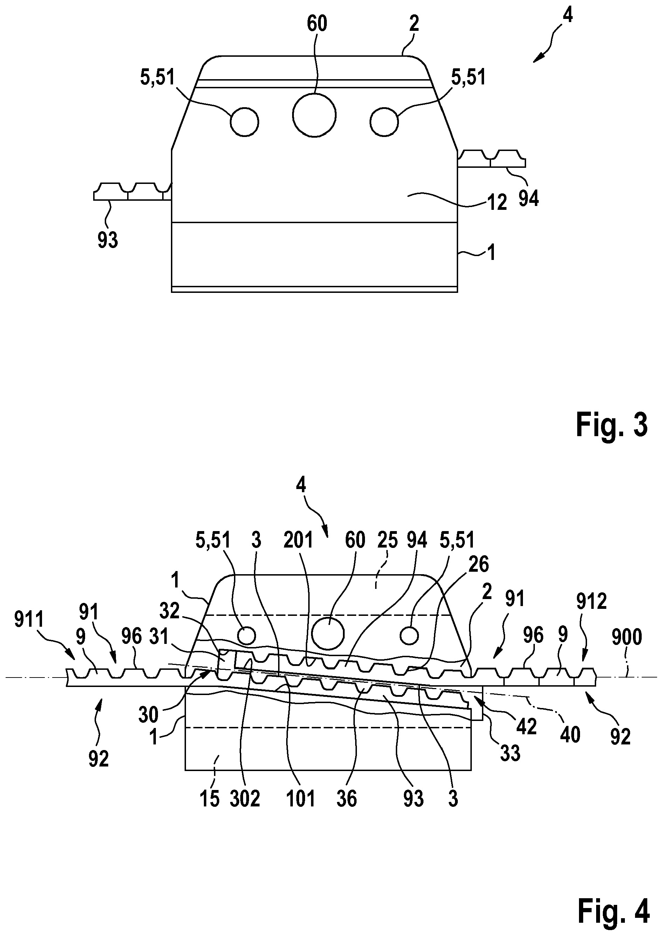

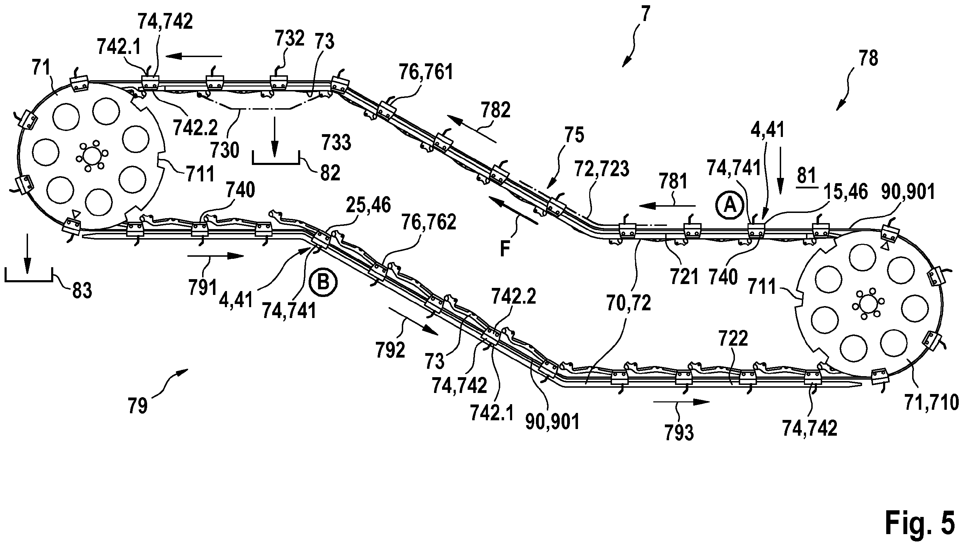

Eine andere zusätzliche, aus Fig. 1 bis 3 hervorgehende Gestaltung der Antriebsband-Verbindungseinrichtung 4 bzw. des Verbindungskörpers 41 besteht darin, dass die Schenkelwände 12 des ersten äußeren Verbindungsteils 1 zusammen mit einem an dem ersten äußeren Verbindungsteil 1 hervorstehenden äußeren Teil des zweiten äußeren Verbindungsteils 2 ein Formteil mit zum Beispiel einer trapezförmigen Ausformung, einen Trapezkopf bildend, versehen sind, wie dies insbesondere aus Fig. 1 und 3 ersichtlich ist. Die Ausformung bildet allgemein ein Formteil, das eingerichtet werden kann, um mit einer Umlenkeinrichtung zusammenzuwirken, in der das Formteil zum Beispiel als Kulissenteil von Kulissenausnehmungen zum Führen der Antriebsband-Verbindungseinrichtung 4 mitgenommen wird. Ein Beispiel wird weiter unten anhand der Fig. 5 bis 7 beschrieben.

An der einen Schenkelwand 12 des ersten äußeren Verbindungsteils 1 ist in der Längsmitte ein Lagerelement 60 ausgebildet, das im Ausführungsbeispiel neben den Befestigungselementen 51 in deren Höhe angeordnet ist. Dieses Lagerelement 60 wird als Bestandteil eines Transportlagers 6 vorgesehen, das zum Anbringen und Lagern eines Transportelements 73 zum Fördern eines Objekts eingerichtet wird. Gestaltung und Funktion werden anhand eines Ausführungsbeispiels gemäß Fig. 4 und 5 beschrieben.

Fig. 4 zeigt eine weitere Antriebsband-Verbindungseinrichtung 4, deren grundsätzliche Gestaltung der Antriebsband-Verbindungseinrichtung gemäß Fig. 1 bis 3 entspricht. Für entsprechende Teile werden gleiche Bezugszeichen verwendet. Ein Unterschied besteht darin, dass das innere Verbindungsteil 3 innerhalb des Verbindungsraums 42 zum Herstellen einer schräg ausgerichteten Überlappung der Antriebsband-Endabschnitte 93, 94 längs der Verbindungslinie 40 schräg angeordnet ist. Entsprechend sind die erste äußere (ebene) Verbindungsfläche 101 und die zweite äußere (profilbehaftete) Verbindungsfläche 201 in Parallellage zueinander schräg ausgerichtet, um den Verbindungsraum 42 zur Schräganordnung des inneren Verbindungsteils 3 zu bilden. Allgemein wird die Schräganordnung mit einem Schrägwinkel derart eingerichtet, dass, in Anpassung auf das Überlappungsmaß der Antriebs-Bandendabschnitte 93, 94 bzw. an die Distanz d, die Antriebs-Bandendabschnitte 93, 94 in einer gemeinsamen geraden Band-Zuglinie 900 zu liegen kommen.

Das innere Verbindungsteil 3 weist einen in der Schräglage höheren Querrand auf, der, wie zuvor beschrieben, ein Verbindungs-Federteil 331 des inneren Verbindungsmittels 30 bildet. Der gegenüberliegende Querrand 33 des inneren Verbindungsteils 3 ist als Außenrand geformt, der als weiterer Bestandteil des inneren Verbindungsmittels 30 auf einem korrespondierenden Querrand des ersten äußeren Verbindungsteils 1 im Formschluss sitzt. Allgemein sind die Querränder 31, 33 derart eingerichtet, dass sie zusammen mit den Antriebsband-Endabschnitten 93, 94 den Verbindungskörper 41 stirnseitig dichten.

Wie im Ausführungsbeispiel der Fig. 1 bis 3 ist das erste äußere Verbindungsteil 1 zusammen mit einer passenden Dimensionierung des zweiten äußeren Verbindungsteils 2 in der Längsdimension des Verbindungskörpers 41 als Trapezkopf geformt. Dadurch ist als Formteil 740 ein Kulissenteil ausgebildet, das zum formschlüssigen Eingriff in eine Kulissenausnehmung 711 gelangt, wie dies beispielsweise in Fig. 5 dargestellt ist. In der gleichen Weise wie anhand der Fig. 1 bis 3 beschrieben, sind an den Schenkelwänden 12 des ersten äußeren Verbindungsteils 1 Befestigungselemente 51 des Befestigungsmittels 5 zum festen Verbinden des ersten äußeren Verbindungsteils 1 mit dem zweiten äußeren Verbindungsteil 2 mit fest eingerichteter Distanz d zwischen den beiden äußeren Verbindungsfläche 101, 201 vorgesehen.

Fig. 5 zeigt eine erfindungsgemäße Fördereinrichtung 7, in die erfindungsgemäße Antriebsband-Verbindungseinrichtungen 4, die zum Beispiel wie die Antriebsband-Verbindungseinrichtung 4 gemäß Fig. 4 gestaltet sind, als wesentliche Bestandteile integriert sind.

Die Fördereinrichtung 7 umfasst zwei endlose flache Antriebsbänder 90, 901, 902, die in Parallelanordnung mit Parallelabstand angeordnet und längs einer Förderstrecke 78 und einer Rückführstrecke 79 mittels Umlenkräder 71 umlaufend geführt werden. Ein Paar der Umlenkräder 71 sind Antriebs-Umlenkräder 710, die mit einer nicht dargestellten Antriebseinrichtung synchron getrieben werden. Zweckmäßig kann es sein, sämtliche Umlenkräder 71 direkt synchron anzutreiben.

Jedes flache Antriebsband 901, 902 ist mindestens mit einer erfindungsgemäßen Antriebsband-Verbindungseinrichtung 4 zum endlosen Band verbunden. In Fig. 5 ist die eine Längsseite der Fördereinrichtung 7 mit dem endlosen flachen Antriebsband 901 zu sehen. Es wird das Antriebsband 901 mit Bestandteilen und Führung näher beschrieben. Diese Beschreibung trifft geleichermaßen für das andere Antriebsband 902 mit Bestandteilen und Anordnung zu.

Im Ausführungsbeispiel der Fig. 5 befinden sich zum Beispiel an einer Position A und einer Position B Antriebsband-Verbindungseinrichtungen 4. Wie in Fig. 5 ersichtlich, ist das endlose flache Antriebsband 901 um die Umlenkräder 71 geführt, die in der Höhe versetzt gelagert sind. Zwischen den Umlenkrädern 71 befindet sich eine obere Förderstrecke 78, die in Förderrichtung, von einer Aufgabe-/Beschickungsstelle 81 im Bereich des angetriebenen Umlenkrades 710 ausgehend, zunächst in einem Abschnitt 781 horizontal, dann in einem Abschnitt 782 schräg nach oben und anschließend wieder in einem Abschnitt 783 horizontal zu dem anderen höher gelegenen Umlenkrad 71 hin verläuft. In der gleichen Weise, nur umgekehrt, wird das flache Antriebsband 901 von dem höher gelegenen Umlenkrad 71 zu dem Antriebs-Umlenkrad 710 längs einer Rückführstrecke 79 mit entsprechenden Abschnitten 791 bis 793 geführt. Anordnung und Führung des anderen flachen Antriebsbandes 902 mit Umlenkrädern 71 erfolgen, wie erwähnt, in der gleichen Weise.

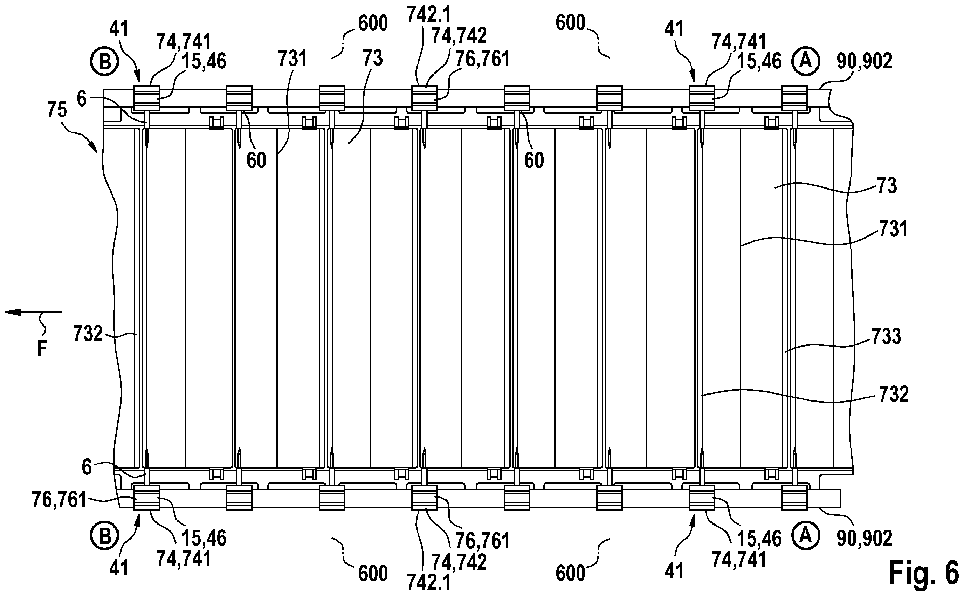

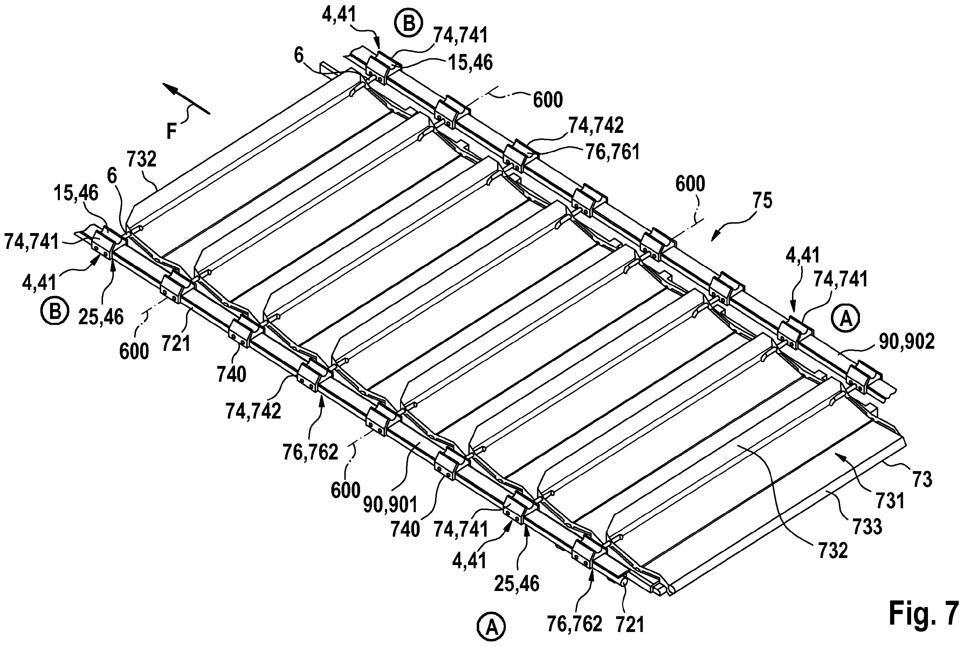

Wie aus Fig. 6 und 7 ersichtlich, tragen die beiden parallel angeordneten und laufenden Antriebsbänder 901, 902, die mittels der Antriebs-Umlenkräder 710 synchron bewegbar sind, in abstandsloser Parallelanordnung Transportelemente 73. Diese bilden zusammen mit sie paarweise tragenden Transportblöcken 74, die an den Antriebsbändern 901, 902 befestigt sind, ein in Förderrichtung F endlos umlaufendes Förderband 75. Im Ausführungsbeispiel sind die Transportelemente 73 Elemente mit Mulden 731, die jeweils wenigstens ein Objekt zum Fördern entlang der Förderstrecke 78 aufnehmen.

Jedes Transportelement 73 wird mittels eines zugehörigen Paares von Transportblöcken 74 getragen. Im Ausführungsbeispiel ist zum Lagern des Transportelements 73 jeweils ein Transportlager 6 in Form eines Schwenklagers eingerichtet. Das Schwenklager weist an den Transportblöcken 74 des Transportpaares Lagerelemente 60 bildende Schwenklagerstellen auf. Die Anlenkung erfolgt an einen in Laufrichtung vorderen hervorstehenden Transportrand 732 des Transportelements 73. Der andere in Laufrichtung hintere Transportrand 733 des Transportelements 73 wird mittels einer nicht dargestellten Transportelement-Führungseinrichtung geführt, derart, dass - wie in Fig. 5 bis 7 dargestellt - die Transportelemente 73 in den Abschnitten 781 bis 783 und 791 bis 793 in Lagen bleiben, die mit den flachen Antriebsbändern 901, 902 im Wesentlichen parallel liegen.

Die Fördereinrichtung 7 kann eingerichtet sein, um die Transportelemente 73 längs der Förderstrecke 78 von der Beschickungsstelle 81 zu einer Abgabe-/Abförderstelle 83 am Ende der Förderstrecke 78 im Bereich des Umlenkrades 71 zu bewegen. Die Fördereinrichtung 7 kann so eingerichtet sein, dass an wenigstens einer Stelle der Förderstrecke 78 eine Abgabe-/Abförderstelle 82 vorgesehen ist. Der hintere Transportrand 733 des Transportelements 73 wird dann entlang einer Kurve 730 geführt, so dass das schwenkbare Transportelement 73 im Bereich der Abförderstelle 82 nach unten geschwenkt wird. Das Abschwenken der Transportmulde 731 kann mittels einer nicht dargestellten steuerbaren Weiche, die den hinteren Transportrand 733 bei Bedarf in den Weg der Kurve 730 führt, gesteuert werden. Es lassen sich Objekte mittels einer Steuerung selektiv auf mehrere Abgabe-/Abförderstellen verteilen.

Sämtliche Transportblöcke 74 sind mit ihren Außenkonturen gleich und übereinstimmend ausgebildet. Sie werden, wie aus Fig. 5 bis 7 ersichtlich, von den endlos flachen Antriebsbändern 90 durchsetzt, wobei sie fest, das heißt unverschiebbar, an jedem flachen Antriebsband 90 befestigt sind.

Jeder Transportblock 74 ist ein Multi-Funktionsblock. Der Transportblock 74 weist Führungselemente 761, 762 auf, die zum Führen des Förderbandes 75 in den horizontalen und schrägen Abschnitten 781 bis 783, 791 bis 793 im Gleitsitz auf Führungsschienen 72 einer Führungseinrichtung 70, nämlich auf ersten Führungsschienen 721 und zweiten Führungsschienen 722 geführt werden. Die Führungsschienen 721 sind längs der Förderstecke 78 und die Führungsschienen 722 längs der Rückführstrecke 79 angeordnet. Neben dieser Führungsfunktion besteht eine weitere Funktion in der vorzugsweise schwenkbewegbaren Lagerung der Transportelemente 73. Eine dritte Funktion besteht darin, dass die Transportblöcke 74 treibbare Bandelemente sind. Jeder Transportblock 74 ist mit einem Formteil 740 gestaltet, das ein Kulissenelement bildet und zusammen mit Kulissenausnehmungen 711 am Umfang der Umlenkräder 71 zu einer Kulissenführung gehört. Die Kulissenausnehmungen 711 sind im Abstand der Transportblöcke 74 an den Antriebsbändern 901, 902 gleich verteilt am Umfang jedes Umlenkrades 71 ausgebildet. Die Kulissenführung sorgt dafür, dass die Antriebsbänder 901, 902 mittels der Umlenkräder 71 im Ausführungsbeispiel um 180 ° umgelenkt werden.

Jeder Transportblock 74 weist eine Kontur und Form auf wie der Verbindungskörper 41 der anhand der in Fig. 4 beschriebenen Antriebsband-Verbindungseinrichtung 4. Transportblöcke 741, die durch Verbindungskörper 41 gebildet sind, weisen zusätzlich die Funktion der Verbindung von Antriebsband-Endabschnitten 93, 94 auf. Man erkennt, dass die Antriebsband-Verbindungseinrichtung 4 an jeder gewünschten Stelle als Transportblock 74, 741 in die Folge der übrigen Transportblöcke 74, 742 eingereiht werden kann. Es entfallen Band-Verbindungsstellen zwischen den Transportblöcken 74. Ein durch die Antriebsband-Verbindungseinrichtung 4 gebildeter Transportblock 74, 741 kann ohne Weiteres an mehreren Stellen in den Bandlauf eingefügt werden, um zum Beispiel einen beschädigten oder verschlissenen Bandabschnitt aus dem Umlaufband herauszunehmen und zu ersetzen. In Fig. 6 und 7 sind, als Beispiel an Stellen A und B, Verbindungskörper 41 in Paar-Anordnung an den Antriebsbändern 901, 902 befestigt. Die Anordnung ist nicht auf die Paar-Anordnung von Verbindungskörpern 41 beschränkt, sondern die Anlenkung kann an einer Seite mit einem Transportblock 74, 742 vorgesehen sein.

Wie zu Fig. 4 und im Übrigen zu Fig. 1 bis 3 beschrieben, ist das ein Kulissenteil bildende Formteil 740 als im Längsquerschnitt trapezförmiger Kopf geformt, wobei die Kulissenausnehmungen 711 entsprechend trapezförmig sind. Im Ausführungsbeispiel sind die Schwenklagerelemente 60 an sämtlichen Transportblöcken 74 in der Längsmitte des Trapezkopfes angeordnet.

Schließlich weist auch jeder Transportblock 74 Führungselemente 76 auf, wie sie zu Fig. 4 - sowie auch zu Fig. 1 bis 3 - beschrieben worden sind, nämlich dort in Form einer Führungs-Längsnut 15, die im Übrigen mit 761 bezeichnet wird, und in Form einer Führungs-Längsnut 25, die allgemein mit 762 bezeichnet wird.

Anhand der Fig. 5 und 7 wird deutlich, dass die in dem Trapezkopf ausgebildete Führungs-Längsnut 762, 25 auf der zugehörigen Führungsschiene 721 zur Gleitführung längs der dadurch bestimmten Abschnitte 781 bis 783 der Förderstrecke 78 zu liegen kommt. Im Untertrum, also auf der Rückführstrecke 79 setzen die um 180 ° gewendeten Transportblöcke 74 mit der Führungs-Längsnut 761, 15 auf der zugehörigen Führungsschiene 722 auf, die den Verlauf der Rückführstrecke 79, mit den Abschnitten 791 bis 793 bestimmt. In Fig. 5 ist nur strichpunktiert eine dritte Führungsschiene 72, 723 der Führungseinrichtung 70 dargestellt, die im Übergabebereich zwischen dem Abschnitt 781 und 782 angeordnet ist. An diese Führungsschiene 723 gelangen die Führungs-Längsnuten 15, 761 zur Anlage, um das Förderband 75 frei von Abhebung aus dem Abschnitt 781 in den Schrägabschnitt 782 zu führen. Eine entsprechende Führung kann zum Beispiel zwischen dem Neigungsabschnitt 792 und dem Horizontalabschnitt 793 vorgesehen sein, an der dann die Führungselemente 25, 762 zur Anlage kommen.

Die Transportblöcke 74, 742, die an jedem Antriebsband 901, 902 befestigt sind und im Vergleich zu den Transportblöcken 74, 741, die durch die Antriebsband-Verbindungseinrichtung 4 gebildet sind, in weitaus größerer Zahl vorgesehen sind, können zweckmäßig jeweils in ähnlicher Weise wie ein Verbindungskörper 41 konstruiert sein. Eine Ausführungsform besteht darin, dass ein solcher Transportblock 742 - so, wie prinzipiell anhand der Fig. 1 bis 3 dargestellt - ein erstes äußeres Verbindungsteil, nämlich ein erstes äußeres Blockteil 742.1, im Übrigen aber nur noch ein zweites äußeres Verbindungsteil, nämlich ein zweites äußeres Blockteil 742.2, wiederum in Form eines zu dem ersten äußeren Blockteil 742.1 passenden Steckteils aufweist. Das zweite äußere Blockteil 742.2 wird im Unterschied zu dem zweiten äußeren Verbindungsteil 2 gemäß Fig. 1 bis 3 so groß dimensioniert, dass im Zustand der Befestigung an dem ersten äußeren Blockteil 742.1 ein Spaltraum resultiert, der an die Flachform des einlagigen ungeteilten Antriebsbandes 901 bzw. 902 zur Formschlussverbindung angepasst ist. In dieser Verbindung fasst das Zahnprofil des Antriebsbandes 901, 902 in das komplementäre Zahnprofil an einer Verbindungsfläche des zweiten äußeren Blockteils 742.2 ein, während die glatte ebene Fläche des Antriebbandes 901, 902 an der entsprechend glatten ebenen Verbindungsfläche des ersten äußeren Blockteils 742.1 anliegt. Ein solcher Transportblock 74, 742 weist ein Befestigungsmittel auf, das das erste äußere Blockteil 742.1 und das zweite äußere Blockteil 742.2 in der gleichen Weise wie das Befestigungsmittel 5, beschrieben anhand der Fig. 1 bis 4, aneinander befestigt. Die vorgegebene, begrenzte Distanz zwischen den Anlageflächen des ersten äußeren Blockteils 742.1 und des zweiten äußeren Blockteils 742.2 ist auf das der einfachen Dicke des Antriebsbandes entsprechende Maß reduziert, um dieses in dem inneren Blockraum zwischen den beiden äußeren Blockteilen im Formschluss zu befestigen.

Die Transportblöcke 74, 742, die nicht durch die Verbindungskörper 41 gebildet sind, können in anderer Weise an den Antriebsbändern 901, 902 befestigt sein. Hinsichtlich Lagerung und Führung der Transportelemente 73 kommt es auf die übereinstimmende Ausbildung sämtlicher Transportblöcke 74, 741, 742 an.

## Patentansprüche

1. Antriebsband-Verbindungseinrichtung (4), eingerichtet zur zugfesten Verbindung von flachen Antriebsband-Endabschnitten (93, 94), die jeweils zwei Bandflachseiten (91, 92) aufweisen, von denen wenigstens eine erste Bandflachseite (91) ein Band-Oberflächenprofil (911) aufweist, umfassend einen mit Verbindungsteilen (1, 2, 3) in Überlappungsanordnung mehrteiligen, in Bandzugrichtung eine Längsdimension aufweisenden Verbindungskörper (41), der einen die flachen Antriebsband-Endabschnitte (93, 94) zum Verbinden aufnehmenden Verbindungsraum (42) aufweist, wobei die Verbindungsteile (1, 2, 3) zur zugfesten Verbindung der Antriebsband-Endabschnitte (93, 94) aneinander festsetzbar sind und für Verbindungsanlagen mit profilierten Verbindungsflächen (201, 301) zum formschlüssigen Eingriff in die Band-Oberflächenprofile (911) eingerichtet sind, **dadurch gekennzeichnet, dass** der Verbindungsraum (42) zur Aufnahme der Antriebsband-Endabschnitte (93, 94) in Überlappungsanordnung längs einer Verbindungslinie (40) eingerichtet ist, die sich in der Längsdimension des Verbindungskörpers (41) erstreckt, wobei ein erstes äußeres Verbindungsteil (1) und ein zweites äußeres Verbindungsteil (2) den Verbindungsraum (42) begrenzen und zugehörig eine erste äußere Verbindungsfläche (101) und eine zweite äußere Verbindungsfläche (201) aufweisen, die zur Verbindungsanlage einerseits an den einen Antriebsband-Endabschnitt (93) und andererseits an den anderen Antriebsband-Endabschnitt (94) setzbar sind, und wobei innerhalb des Verbindungsraums (42) ein inneres Verbindungsteil (3) mit einer ersten inneren Verbindungsfläche (301) und einer dieser gegenüberliegenden zweiten inneren Verbindungsfläche (302) angeordnet ist, die zur Verbindungsanlage einerseits an den einen Antriebsband-Endabschnitt (93) und andererseits an den anderen Antriebsband-Endabschnitt (94) setzbar sind, wobei einerseits die erste äußere Verbindungsfläche (101) und die erste innere Verbindungsfläche (301) und andererseits die zweite äußere Verbindungsfläche (201) und die zweite innere Verbindungsfläche (302) einander gegenüberliegen, dass weiterhin ein Befestigungsmittel (5) eingerichtet ist, das das erste äußere Verbindungsteil (1) und das zweite äußere Verbindungsteil (2) mit begrenzter fester Distanz zwischen der ersten äußeren Verbindungsfläche (101) und der zweiten äußeren Verbindungsfläche (201) aneinander festsetzt, und dass ein inneres Verbindungsmittel (30) eingerichtet ist, das das innere Verbindungsteil (3) zur in Bandzugrichtung festen Verbindung mit wenigstens einem der beiden äußeren Verbindungsteile (1, 2) verbindet.

2. Antriebsband-Verbindungseinrichtung nach Anspruch 1, **dadurch gekennzeichnet, dass** das Befestigungsmittel (5) mit Befestigungselementen (51) eingerichtet ist, die außerhalb des Verbindungsraums (42) quer zur Richtung der Verbindungslinie (40) sowie quer zu einer durch die Überlappungsanordnung der Verbindungsteile (1, 2, 3) bestimmten Schichtungsrichtung der Verbindungsteile (1, 2, 3) angeordnet sind.

3. Antriebsband-Verbindungseinrichtung nach Anspruch 1 oder 2, **dadurch gekennzeichnet, dass** das innere Verbindungsmittel (30) zum Herstellen einer in Bandzugrichtung festen Formschlussverbindung eingerichtet ist.

4. Antriebsband-Verbindungseinrichtung nach einem der Ansprüche 1 bis 3, **dadurch gekennzeichnet, dass** die erste innere Verbindungsfläche (301) zum formschlüssigen Eingriff in das Band-Oberflächenprofil (911) der Bandflachseite (91) eines zugeordneten flachen Antriebsband-Endabschnitts (93) profiliert ausgebildet ist.

5. Antriebsband-Verbindungseinrichtung nach einem der Ansprüche 1 bis 4, **dadurch gekennzeichnet, dass** die zweite äußere Verbindungsfläche (201) zum formschlüssigen Eingriff in das Band-Oberflächenprofil (911) der Bandflachseite (91) eines zugeordneten flachen Antriebsband-Endabschnitts (94) profiliert ausgebildet ist.

6. Antriebsband-Verbindungseinrichtung nach eine der Ansprüche 1 bis 5, **dadurch gekennzeichnet, dass** die zweite innere Verbindungsfläche (302) zur planen Verbindungsanlage an eine entsprechend plane Bandflachseite (92) eines zugeordneten flachen Antriebsband-Endabschnitts (94) ausgebildet ist.

7. Antriebsband-Verbindungseinrichtung nach einem der Ansprüche 1 bis 6, **dadurch gekennzeichnet, dass** die erste äußere Verbindungsfläche (101) zur planen Verbindungsanlage an eine entsprechend plane Bandflachseite (92) eines zugeordneten flachen Antriebsband-Endabschnitts (93) ausgebildet ist.

8. Antriebsband-Verbindungseinrichtung nach einem der Ansprüche 1 bis 7, **dadurch gekennzeichnet, dass** die profilierten Verbindungsflächen (201, 301) durch ein Zahnprofil (26, 36) gebildet sind, das mit einem Zahnriemenprofil komplementär ist.

9. Antriebsband-Verbindungseinrichtung nach einem der Ansprüche 1 bis 8, **dadurch gekennzeichnet, dass** einerseits die erste äußere Verbindungsfläche (101) und die zweite innere Verbindungsfläche (302) und andererseits die erste innere Verbindungsfläche (301) und die zweite äußere Verbindungsfläche (201) gleich ausgebildet sind.

10. Antriebsband-Verbindungseinrichtung nach einem der Ansprüche 1 bis 9, **dadurch gekennzeichnet, dass** das innere Verbindungsteil (3) innerhalb des Verbindungsraums (42) zum Herstellen einer schräg ausgerichteten Überlappung der zu verbindenden Antriebsband-Endabschnitte (93, 94) längs der Verbindungslinie (40) schräg angeordnet ist.

11. Antriebsband-Verbindungseinrichtung nach einem der Ansprüche 1 bis 10, **dadurch gekennzeichnet, dass** das erste äußere Verbindungsteil (1) durch ein Verbindungsgehäuse mit einem Gehäuse-Innenraum gebildet ist, in den das innere Verbindungsteil (3) und das zweite äußere Verbindungsteil (2) im Passsitz einfügbar sind.

12. Antriebsband-Verbindungseinrichtung nach einem der Ansprüche 1 bis 11, **dadurch gekennzeichnet, dass** der Verbindungskörper (41) zur zugfesten Verbindung von flachen Antriebsband-Endabschnitten (93, 94) eines flachen Antriebsbandes (9) eingerichtet ist, das mittels der zugfesten Verbindung zu einem endlosen flachen Antriebsband (90) verbindbar ist.

13. Antriebsband-Verbindungseinrichtung nach einem der Ansprüche 1 bis 12, **dadurch gekennzeichnet, dass** an der Antriebsband-Verbindungseinrichtung (4) wenigstens ein Führungselement (46) zur Längsführung der Antriebsband-Verbindungseinrichtung (4) entlang einer Führungslinie eingerichtet ist.

14. Antriebsband-Verbindungseinrichtung nach Anspruch 13, **dadurch gekennzeichnet, dass** an wenigstens einem der äußeren Verbindungsteile (1, 2) eine das Führungselement (46) bildende, sich in der Längsdimension des Verbindungskörpers (41) erstreckende Führungs-Längsnut (15, 25) ausgebildet ist, die zur Gleitführung auf eine die Führungslinie bestimmende Führungsschiene (721, 722) aufsetzbar ist.

15. Antriebsband-Verbindungseinrichtung nach einem der Ansprüche 1 bis 14, **dadurch gekennzeichnet, dass** der Verbindungskörper (41) wenigstens ein Kulissenteil aufweist, das zum formschlüssigen Eingriff in eine Kulissenausnehmung (711) einer Umlenkeinrichtung geformt ist.

16. Antriebsband-Verbindungseinrichtung nach einem der Ansprüche 1 bis 15, **dadurch gekennzeichnet, dass** an wenigstens einem äußeren Verbindungsteil (1, 2) ein Anschlusselement zum Lagern eines Transportelements (73) ausgebildet ist.

17. Flaches Antriebsband, das mittels wenigstens einer Antriebsband-Verbindungseinrichtung (4) nach einem der Ansprüche 1 bis 16 zu einem im Umlauf endlos führbaren flachen Antriebsband (90) verbunden ist.

18. Fördereinrichtung (7), umfassend zwei flache Antriebsbänder (901, 902) nach Anspruch 17, die in Parallelanordnung mit Parallelabstand angeordnet und längs einer Förderstrecke (78) und einer Rückführstrecke (79) gemeinsam umlaufend geführt und antreibbar sind, und umfassend wenigstens zwei der Antriebsband-Verbindungseinrichtungen (4), von denen die eine das eine flache Antriebsband (901) und die andere das andere flache Antriebsband (902) endlos verbindet, wobei ein Förderband (75) durch eine Reihe von parallelen Transportelementen (73) und Transportblöcken (74) gebildet ist, die an den flachen Antriebsbändern (901, 902) zur Mitnahme befestigt sind und jeweils im Paar ein Transportlager (6) aufweisen, das zwischen den beiden flachen Antriebsbändern (901, 902) ein zugehöriges genanntes Transportelement (73) zur Förderung eines Objekts lagert, und wobei die Verbindungskörper (41) der Antriebsband-Verbindungseinrichtungen (4) als genannte Transportblöcke (74) eingerichtet sind.

19. Fördereinrichtung (7) nach Anspruch 18, **dadurch gekennzeichnet, dass** die Transportlager (6) als Schwenklager eingerichtet sind, die jeweils das Transportelement (73) um eine Transportelement-Schwenkachse (600) hin und her schwenkbar anlenken, wobei an den Transportblöcken (74) jeweils Lagerelemente (60) bildende Schwenklagerstellen ausgebildet sind.

20. Fördereinrichtung (7) nach Anspruch 18 oder 19, **dadurch gekennzeichnet, dass** die Transportblöcke (74) treibbare Bandelemente mit gleichen Formteilen (740) bilden und dass die Fördereinrichtung (7) mit einem Paar von Umlenkrädern (71) zur Umlaufführung eingerichtet ist, wobei die Umlenkräder (71) umfangsseitige Kulissenausnehmungen (711) aufweisen, die die gleichen Formteile (740) der treibbaren Bandelemente zur Bandumlenkung und, an wenigstens einem ein Bandantriebsmittel bildenden Umlenkrad (710) des Paares der Umlenkräder (71), zum Antrieb der flachen Antriebsbänder (901, 902) mitnehmen.

21. Fördereinrichtung (7) nach einem der Ansprüche 18 bis 20, **dadurch gekennzeichnet, dass** die Fördereinrichtung (7) mit einer Führungseinrichtung (70) eingerichtet ist, die Führungsschienen (72) aufweist, die an der Förderstrecke (78) und der Rückführstrecke (79) der flachen Antriebsbänder (901, 902) angeordnet sind, und dass jeder Transportblock (74) wenigstens ein Führungselement (46, 76) aufweist, das mittels wenigstens einer zugeordneten genannten Führungsschiene (72, 721, 722) geführt ist.

22. Fördereinrichtung (7) nach Anspruch 21, **dadurch gekennzeichnet, dass** an jedem Transportblock (74) zwei Führungs-Längsnuten (15, 25; 761, 762), die die Führungselemente (46, 76) bilden, mit von den Bandflachseiten (91, 92) abgewandten Längsöffnungen ausgebildet sind, wobei wenigstens eine genannte Führungs-Längsnut (25; 762) auf einer an der Förderstrecke (78) angeordneten ersten Führungsschiene (721) und wenigstens eine genannte Führungs-Längsnut (15, 761) auf einer an der Rückführstrecke angeordneten zweiten Führungsschiene (722) zur Anlage gelangt.

23. Fördereinrichtung (7) nach Anspruch 21 oder 22, **dadurch gekennzeichnet, dass** die Förderstrecke (78) einen eine Schrägstrecke bildenden schrägen Abschnitt (782) aufweist, dem eine Führungsschiene (723) zugeordnet ist, an der ein genanntes Führungselement (15, 761) derart zur Anlage gelangt, dass das Förderband (75) in die oder aus der Schrägstrecke geführt wird.

24. Fördereinrichtung (7) nach einem der Ansprüche 18 bis 23, **dadurch gekennzeichnet, dass** ein genannter Transportblock (74, 742), der an einem genannten, ihn durchsetzenden, ungeteilten flachen Antriebsband (901, 902) befestigt ist, ein erstes äußeres Blockteil (742.1) und ein zweites äußeres Blockteil (742.2) aufweist, zwischen denen ein innerer Blockraum mit definierter, begrenzter Distanz zwischen Formschlussflächen ausgebildet ist, die sich im Eingriff mit dem Antriebsband (901, 902) befinden.

25. Fördereinrichtung (7) nach einem der Ansprüche 18 bis 24, **dadurch gekennzeichnet, dass** sämtliche Transportblöcke (74), einschließlich der durch die Verbindungskörper (41) der Antriebsband-Verbindungseinrichtungen (4) gebildeten Transportblöcke (741), mit sämtlichen Außenkonturen gleich ausgebildet sind.

## Claims

1. A drive belt connecting device (4) designed for the tension-resistant connection of flat drive belt end sections (93, 94), each comprising two belt flat sides (91, 92), of which at least a first belt flat side (91) has a belt surface profile (911), comprising a multi-part connecting body (41) with a longitudinal dimension in the belt tension direction and having connecting parts (1, 2, 3) in an overlapping arrangement, said connecting body having a connecting chamber (42) to accommodate the flat drive belt end sections (93, 94) for connection, wherein the connecting parts (1, 2, 3) can be fixed to each other for tension-resistant connection of the drive belt end sections (93, 94) and are equipped with profiled connecting surfaces (201, 301) to provide connecting arrangements for positive-locking engagement into the belt surface profiles (911), **characterised in that** the connecting chamber (42) to accommodate the drive belt end sections (93, 94) in an overlapping arrangement is arranged along a connecting line (40) extending in the longitudinal dimension of the connecting body (41), wherein a first outer connecting part (1) and a second outer connecting part (2) bound the connecting chamber (42) and comprise an associated first outer connecting surface (101) and a second outer connecting surface (201), which, on the one hand, can be placed onto the one drive belt end section (93) and, on the other hand, onto the other drive belt end section (94) in a connecting arrangement, and wherein an inner connecting part (3) with a first inner connecting surface (301) and an opposing second inner connecting surface (302) is arranged inside the connecting chamber (42), which, on the one hand, can be placed onto the one drive belt end section (93) and, on the other hand, onto the other drive belt end section (94) in a connecting arrangement, wherein the first outer connecting surface (101) and the first inner connecting surface (301), on the one hand, and the second outer connecting surface (201) and the second inner connecting surface (302), on the other hand, are opposite each other, that furthermore a fastening means (5) is provided to fasten the first outer connecting part (1) and the second outer connecting part (2) to each other at a limited fixed distance between the first outer connecting surface (101) and the second outer connecting surface (201), and that an inner connecting means (30) is provided to connect the inner connecting part (3) to at least one of the two outer connecting parts (1, 2) for connection that is secure in the belt tension direction.

2. Drive belt connecting device according to claim 1, **characterised in that** the fastening means (5) is designed with fastening elements (51), which are arranged outside the connecting chamber (42) transversally to the direction of the connecting line (40) and transversally to a layering direction of the connecting parts (1, 2, 3) determined by the overlapping arrangement of the connecting parts (1, 2, 3).

3. Drive belt connecting device according to claim 1 or 2, **characterised in that** the inner connecting means (30) is configured to provide a secure positive-locking connection in the belt tension direction.

4. Drive belt connecting device according to any one of claims 1 to 3, **characterised in that** the first inner connecting surface (301) is designed with a profile for positive-locking engagement into the belt surface profile (911) of the belt flat side (91) of an associated flat drive belt end section (93).

5. Drive belt connecting device according to any one of claims 1 to 4, **characterised in that** the second outer connecting surface (201) is designed with a profile for positive-locking fit engagement into the belt surface profile (911) of the belt flat side (91) of an associated flat drive belt end section (94).

6. Drive belt connecting device according to any one of claims 1 to 5, **characterised in that** the second inner connecting surface (302) is designed for a planar connecting arrangement against a corresponding planar belt flat side (92) of an associated flat drive belt end section (94).

7. Drive belt connecting device according to any one of claims 1 to 6, **characterised in that** the first outer connecting surface (101) is designed for a planar connecting arrangement against a corresponding planar belt flat side (92) of an associated flat drive belt end section (93).

8. Drive belt connecting device according to any one of claims 1 to 7, **characterised in that** the profiled connecting surfaces (201, 301) are formed by a tooth profile (26, 36) that is complementary to a toothed belt profile.

9. Drive belt connecting device according to any one of claims 1 to 8, **characterised in that** the first outer connecting surface (101) and the second inner connecting surface (302), on the one hand, and the first inner connecting surface (301) and the second outer connecting surface (201), on the other hand, are similarly configured.

10. Drive belt connecting device according to any one of claims 1 to 9, **characterised in that** the inner connecting part (3) is obliquely arranged inside the connecting chamber (42) to produce an oblique overlapping of the drive belt end sections (93, 94) to be connected along the connecting line (40).

11. Drive belt connecting device according to any one of claims 1 to 10, **characterised in that** the first outer connecting part (1) is formed by a connecting housing with an internal housing inner chamber, into which the inner connecting part (3) and the second outer connecting part (2) can be inserted in a snug fit.

12. Drive belt connecting device according to any one of claims 1 to 11, **characterised in that** the connecting body (41) is designed for tension-resistant connection of flat drive belt end sections (93, 94) of a flat drive belt (9), which can be connected to a continuous flat drive belt (90) by means of the tension-resistant connection.

13. Drive belt connecting device according to any one of claims 1 to 12, **characterised in that** at least one guide element (46) for guiding the drive belt connecting device (4) longitudinally along a guide line is configured on the drive belt connecting device (4).

14. Drive belt connecting device according to claim 13, **characterised in that** a guiding longitudinal groove (15, 25) which forms the guide element (46) and extends in the longitudinal dimension of the connecting body (41) is arranged on at least one of the outer connecting parts (1, 2), wherein the longitudinal groove can be placed as a sliding guide on a guiding rail (721, 722) determining the guide line.

15. Drive belt connecting device according to any one of claims 1 to 14, **characterised in that** the connecting body (41) has at least one link part that is shaped for positive-locking engagement into a link recess (711) of a deflection device.

16. Drive belt connecting device according to any one of claims 1 to 15, **characterised in that** a connecting element is configured on at least one outer connecting part (1, 2) to support a transport element (73).

17. Flat drive belt that is connected to a continuously circulating flat drive belt (90) by means of at least one drive belt connecting device (4) according to any one of claims 1 to 16.

18. Conveying device (7), comprising two flat drive belts (901, 902) according to claim 17, which are arranged in a parallel arrangement at a parallel interval and can be guided and driven to circulate together along a conveying path (78) and a return path (79), and comprising at least two of the drive belt connecting devices (4), one of which continuously connects the one flat drive belt (901) and the other connects the other flat drive belt (902), wherein a conveyor belt (75) is formed by a series of parallel transport elements (73) and transport blocks (74), which are fastened onto the flat drive belts (901, 902) for carriage and each pair having a transport bearing (6), which bears an associated said transport element (73) between the two flat drive belts (901, 902) to convey an object, and wherein the connecting bodies (41) of the drive belt connecting devices (4) are configured as said transport blocks (74).

19. Conveying device (7) according to claim 18, **characterised in that** the transport bearings (6) are configured as pivot bearings, which in each case deflect the transport element (73) to pivot back and forth around a transport element pivot axis (600), wherein pivot bearing points each forming bearing elements (60) are configured on the transport blocks (74).

20. Conveying device (7) according to claim 18 or 19, **characterised in that** the transport blocks (74) form driveable belt elements with identical formed parts (740) and that the conveying device (7) is equipped with a pair of deflection wheels (71) for circulation, wherein the deflection wheels (71) have circumferential link recesses (711), which entrain the identical formed parts (740) of the driveable belt elements for deflecting the belts and, on at least one deflection wheel (710) of the pair of deflection wheels (71), which forms a belt drive means, for driving the flat drive belts (901, 902).

21. Conveying device (7) according to any one of claims 18 to 20, **characterised in that** the conveying device (7) is equipped with a guiding device (70) that has guiding rails (72) arranged on the conveying path (78) and the return path (79) of the flat drive belts (901, 902), and that each transport block (74) comprises at least one guide element (46, 76) that is guided by means of at least one associated said guiding rail (72, 721, 722).

22. Conveying device (7) according to claim 21, **characterised in that** two guiding longitudinal grooves (15, 25; 761, 762) are formed on each transport block (74) forming guide elements (46, 76) with longitudinal openings facing away from the belt flat sides (91, 92), wherein at least one said longitudinal guiding groove (25; 762) rests on a first guiding rail (721) arranged on the conveying path (78) and at least one said longitudinal guiding groove (15, 761) rests on a second guiding rail (722) arranged on the return path.

23. Conveying device (7) according to claim 21 or 22, **characterised in that** the conveying path (78) has a sloping section (782) forming a sloping path, to which is assigned a guiding rail (723), on which a said guide element (15, 761) rests in such a way that the conveyor belt (75) is guided into or out of the sloping path.

24. Conveying device (7) according to any one of claims 18 to 23, **characterised in that** a said transport block (74, 742), which is fastened onto a said undivided flat drive belt (901, 902) traversing it, comprises a first outer block part (742.1) and a second outer block part (742.2), between which is formed an inner block space with limited fixed distance between positive-locking surfaces, which are in engagement with the drive belt (901, 902).

25. The conveying device (7) according to any one of claims 18 to 24, **characterised in that** all transport blocks (74), including the transport blocks (741) formed by the connecting bodies (41) of the drive belt connecting devices (4) are of identical design in terms of all external contours.

## Revendications

1. Dispositif de liaison de courroie d'entraînement (4), conçu pour relier de manière résistante à la traction des parties d'extrémité plates de courroie d'entraînement (93, 94) qui présentent respectivement deux faces plates de courroie (91, 92) dont au moins une première face plate de courroie (91) présente un profil de surface de courroie (911), comprenant un corps de liaison (41) à plusieurs parties en agencement de chevauchement avec des pièces de liaison (1, 2, 3), qui présente une dimension longitudinale dans le sens de traction de la courroie et un espace de liaison (42) accueillant les parties d'extrémité plates de courroie d'entraînement (93, 94) destinées à réaliser la liaison, lesdites pièces de liaison (1, 2, 3) destinées à relier de manière résistante à la traction les parties d'extrémité de courroie d'entraînement (93, 94) pouvant être accrochées les unes aux autres et étant, pour établir les liaisons à l'aide de surfaces de liaison profilées (201, 301), conçues pour avoir prise par complémentarité de forme dans les profils de surface de courroie (911), **caractérisé en ce que** l'espace de liaison (42) est conçu pour accueillir les parties d'extrémité de courroie d'entraînement (93, 94) en agencement de chevauchement le long d'une ligne de liaison (40) qui s'étend dans le sens longitudinal du corps de liaison (41), une première pièce de liaison extérieure (1) et une deuxième pièce de liaison extérieure (2) délimitant ledit espace de liaison (42) et présentant de manière correspondante une première surface de liaison extérieure (101) et une deuxième surface de liaison extérieure (201) qui, pour établir la liaison, peuvent être placées d'une part au niveau de ladite une partie d'extrémité de courroie d'entraînement (93) et d'autre part au niveau de ladite autre partie d'extrémité de courroie d'entraînement (94), et au sein dudit espace de liaison (42), une pièce de liaison intérieure (3) étant agencée avec une première surface de liaison intérieure (301) et une deuxième surface de liaison intérieure (302) en face de celle-ci, lesquelles surfaces de liaison peuvent être placées, pour établir la liaison, d'une part au niveau de ladite une partie d'extrémité de courroie d'entraînement (93) et d'autre part au niveau de ladite autre partie d'extrémité de courroie d'entraînement (94), la première surface de liaison extérieure (101) et la première surface de liaison intérieure (301) d'une part, et la deuxième surface de liaison extérieure (201) et la deuxième surface de liaison intérieure (302) d'autre part étant en face les unes des autres, **en ce que** de plus un moyen de fixation (5) est conçu, lequel fixe l'une à l'autre la première pièce de liaison extérieure (1) et la deuxième pièce de liaison extérieure (2) à une distance fixe limitée entre la première surface de liaison extérieure (101) et la deuxième surface de liaison extérieure (201), et qu'un moyen de liaison interne (30) est conçu, lequel relie la pièce de liaison intérieure (3), destinée à établir une liaison fixe dans le sens de traction de courroie, à au moins une des deux pièces de liaison extérieures (1, 2).

2. Dispositif de liaison de courroie d'entraînement selon la revendication 1, **caractérisé en ce que** le moyen de fixation (5) est conçu doté d'éléments de fixation (51) qui sont agencés en dehors de l'espace de liaison (42) à la transversale du sens de la ligne de liaison (40) ainsi qu'à la transversale d'un sens d'empilement des pièces de liaison (1, 2, 3) déterminé par l'agencement de chevauchement desdites pièces de liaison (1, 2, 3).

3. Dispositif de liaison de courroie d'entraînement selon la revendication 1 ou 2, **caractérisé en ce que** le moyen de liaison interne (30) est conçu pour établir une liaison fixe par complémentarité de forme dans le sens de traction de la courroie.

4. Dispositif de liaison de courroie d'entraînement selon l'une quelconque des revendications 1 à 3, **caractérisé en ce que** la première surface de liaison intérieure (301) est réalisée profilée pour avoir prise en complémentarité de forme dans le profil de surface de la courroie (911) de la face plate de courroie (91) d'une partie d'extrémité plate de courroie d'entraînement (93) associée.

5. Dispositif de liaison de courroie d'entraînement selon l'une quelconque des revendications 1 à 4, **caractérisé en ce que** la deuxième surface de liaison extérieure (201) est réalisée profilée pour avoir prise en complémentarité de forme dans le profil de surface de la courroie (911) de la face plate de courroie (91) d'une partie d'extrémité plate de courroie d'entraînement (94) associée.

6. Dispositif de liaison de courroie d'entraînement selon l'une quelconque des revendications 1 à 5, **caractérisé en ce que** la deuxième surface de liaison intérieure (302) est réalisée pour relier et s'appuyer à plat sur une face plate de courroie (92), aplatie de façon correspondante, d'une partie d'extrémité plate de courroie d'entraînement (94) associée.

7. Dispositif de liaison de courroie d'entraînement selon l'une quelconque des revendications 1 à 6, **caractérisé en ce que** la première surface de liaison extérieure (101) est réalisée pour relier et s'appuyer à plat sur une face plate de courroie (92), aplatie de façon correspondante, d'une partie d'extrémité plate de courroie d'entraînement (93) associée.

8. Dispositif de liaison de courroie d'entraînement selon l'une quelconque des revendications 1 à 7, **caractérisé en ce que** les surfaces de liaison profilées (201, 301) sont formées via un profil denté (26, 36) complémentaire d'un profil de courroie crantée.

9. Dispositif de liaison de courroie d'entraînement selon l'une quelconque des revendications 1 à 8, **caractérisé en ce que** la première surface de liaison extérieure (101) et la deuxième surface de liaison intérieure (302) d'une part, et la première surface de liaison intérieure (301) et la deuxième surface de liaison extérieure (201) d'autre part sont réalisées à l'identique.

10. Dispositif de liaison de courroie d'entraînement selon l'une quelconque des revendications 1 à 9, **caractérisé en ce que** la pièce de liaison intérieure (3) est agencée oblique au sein de l'espace de liaison (42) pour réaliser un chevauchement, orienté oblique, des parties d'extrémité de courroie d'entraînement (93, 94) à relier le long de la ligne de liaison (40).

11. Dispositif de liaison de courroie d'entraînement selon l'une quelconque des revendications 1 à 10, **caractérisé en ce que** la première pièce de liaison extérieure (1) est formée par un boîtier de liaison doté d'un espace intérieur de boîtier, dans lequel la pièce de liaison intérieure (3) et la deuxième pièce de liaison extérieure (2) peuvent être introduites en siège ajusté.

12. Dispositif de liaison de courroie d'entraînement selon l'une quelconque des revendications 1 à 11, **caractérisé en ce que** le corps de liaison (41) est conçu pour relier de manière résistante à la traction des parties d'extrémité plates de courroie d'entraînement (93, 94) d'une courroie d'entraînement (9) plate qui peut être reliée à une courroie d'entraînement plate (90) sans fin via la liaison résistante à la traction.

13. Dispositif de liaison de courroie d'entraînement selon l'une quelconque des revendications 1 à 12, **caractérisé en ce qu'**au moins un élément de guidage (46) est conçu sur le dispositif de liaison de courroie d'entraînement (4) pour guider en longueur le dispositif de liaison de courroie d'entraînement (4) le long d'une ligne de guidage.

14. Dispositif de liaison de courroie d'entraînement selon la revendication 13, **caractérisé en ce qu'**est conçue sur au moins une des pièces de liaison extérieures (1, 2) une rainure longitudinale de guidage (15, 25) qui constitue l'élément de guidage (46), qui s'étend dans le sens de la longueur du corps de liaison (41) et qui peut, pour guider par glissement, être posée sur un rail de guidage (721, 722) déterminant la ligne de guidage.

15. Dispositif de liaison de courroie d'entraînement selon l'une quelconque des revendications 1 à 14, **caractérisé en ce que** le corps de liaison (41) présente au moins une pièce coulissante qui est formée pour avoir prise par complémentarité de forme dans un évidement de coulissement (711) d'un dispositif de renvoi.

16. Dispositif de liaison de courroie d'entraînement selon l'une quelconque des revendications 1 à 15, **caractérisé en ce qu'**un élément de raccordement est réalisé à au moins une pièce de liaison extérieure (1, 2) pour arrimer un élément de transport (73).

17. Courroie d'entraînement plate qui est reliée à une courroie d'entraînement plate (90) qui peut être amenée sans fin en circulation au moyen d'au moins un dispositif de liaison de courroie d'entraînement (4) selon l'une quelconque des revendications 1 à 16.

18. Dispositif de transport (7), comprenant deux courroies d'entraînement plates (901, 902) selon la revendication 17, qui sont amenées en commun en circulation et susceptibles d'être entraînées agencées en parallèle à écartement parallèle et le long d'une ligne de convoyage (78) et d'une ligne de renvoi (79), et comprenant au moins deux des dispositifs de liaison de courroie d'entraînement (4), dont l'un relie sans fin ladite courroie d'entraînement plate (901), et l'autre ladite autre courroie d'entraînement plate (902), un convoyeur à bande (75) étant formé par une série d'éléments de transport (73) et de blocs de transport (74) parallèles qui sont fixés aux courroies d'entraînement plates (901, 902) pour les emmener et qui présentent à chaque fois par deux un palier de transport (6) qui arrime entre les deux courroies d'entraînement plates (901, 902) un dit élément de transport (73) correspondant destiné au convoyage d'un objet, et les corps de liaison (41) des dispositifs de liaison de courroie d'entraînement (4) étant conçus en tant que lesdits blocs de transport (74).

19. Dispositif de transport (7) selon la revendication 18, **caractérisé en ce que** les paliers de transport (6) sont conçus sous forme de paliers d'articulation qui articulent chacun en va-et-vient pivotant l'élément de transport (73) autour d'un axe de pivotement d'élément de transport (600), des points de paliers d'articulation constituant respectivement des éléments de palier (60) étant réalisés au niveau des blocs de transport (74).

20. Dispositif de transport (7) selon la revendication 18 ou 19, **caractérisé en ce que** les blocs de transport (74) forment des éléments de courroie aux pièces moulées (740) identiques, susceptibles d'être entraînés, et que le dispositif de transport (7) est conçu doté d'une paire de poupées de renvoi (71) pour amener en circulation, lesdites poupées de renvoi (71) présentant des évidements coulissants (711) sur leur circonférence, lesquels emmènent les mêmes pièces moulées (740) des éléments de courroie susceptibles d'être entraînés, pour renvoyer la courroie et pour entraîner les courroies d'entraînement plates (901, 902) au niveau d'au moins une poupée de renvoi (710) de la paire de poupées de renvoi (71), laquelle poupée forme un moyen d'entraînement de courroie.

21. Dispositif de transport (7) selon l'une quelconque des revendications 18 à 20, **caractérisé en ce que** ledit dispositif de transport (7) est conçu doté d'un dispositif de guidage (70) qui présente des rails de guidage (72) agencés sur la ligne de convoyage (78) et sur la ligne de renvoi (79) des courroies d'entraînement plates (901, 902), et que chaque bloc de transport (74) présente au moins un élément de guidage (46, 76) qui est guidé à l'aide d'au moins un dit rail de guidage (72, 721, 722) associé.

22. Dispositif de transport (7) selon la revendication 21, **caractérisé en ce qu'**à chaque bloc de transport (74), deux rainures longitudinales de guidage (15, 25 ; 761, 762), qui forment les éléments de guidage (46, 76), sont réalisées dotées d'orifices oblongues sur le côté opposé aux faces plates des courroies (91, 92), au moins une dite rainure longitudinale de guidage (25 ; 762) venant s'appuyer sur un premier rail de guidage (721) agencé sur la ligne de convoyage (78) et au moins une dite rainure longitudinale de guidage (15, 761) venant s'appuyer sur un deuxième rail de guidage (722) agencé sur la ligne de renvoi.

23. Dispositif de transport (7) selon la revendication 21 ou 22, **caractérisé en ce que** la ligne de convoyage (78) présente un tronçon oblique (782) formant une ligne oblique, auquel tronçon oblique (782) est associé un rail de guidage (723) sur lequel vient s'appuyer un dit élément de guidage (15, 761) de telle sorte que le convoyeur à bande (75) est guidé en entrée ou en sortie de la ligne oblique.

24. Dispositif de transport (7) selon l'une quelconque des revendications 18 à 23, **caractérisé en ce qu'**un dit bloc de transport (74, 742) fixé à une dite courroie d'entraînement plate (901, 902) non divisée et le traversant, présente une première partie de bloc extérieure (742.1) et une deuxième partie de bloc extérieure (742.2) entre lesquelles est réalisé un espace de bloc intérieur à distance limitée définie entre des surfaces de liaison mécanique qui se trouvent en prise avec la courroie d'entraînement (901, 902).

25. Dispositif de transport (7) selon l'une quelconque des revendications 18 à 24, **caractérisé en ce que** tous les blocs de transport (74), y compris les blocs de transport (741) formés par les corps de liaison (41) des dispositifs de liaison de courroie d'entraînement (4), sont réalisés à l'identique en tous leurs contours extérieurs.
